# EUROPÄISCHE PATENTSCHRIFT

(11) **EP 4 606 006 B1**
(45) Veröffentlichungstag und Bekanntmachung des Hinweises auf die Patenterteilung: **11.03.2026**
(21) Anmeldenummer: 24700785.9
(22) Anmeldetag: 16.01.2024
(51) Int. Cl.: H02G 3/22

(54) **LEITUNGSDURCHFÜHRUNG, VERWENDUNG EINER LEITUNGSDURCHFÜHRUNG UND VERFAHREN ZUR BESTÜCKUNG EINER LEITUNGSDURCHFÜHRUNG**
LINE BUSHING, USE OF A LINE BUSHING, AND METHOD FOR MOUNTING A LINE BUSHING
TRAVERSÉE DE LIGNE, UTILISATION D'UNE TRAVERSÉE DE LIGNE ET PROCÉDÉ DE MONTAGE D'UNE TRAVERSÉE DE LIGNE

(30) Priorität: 17.01.2023 DE 102023101036
(43) Veröffentlichungstag der Anmeldung: 27.08.2025
(73) Patentinhaber: PFLITSCH GMBH & CO. KG, 42499 Hückeswagen (DE)
(72) Erfinder: LECHNER, Martin, 51789 Lindlar (DE)
(74) Vertreter: Geskes, Christoph
(86) Internationale Anmeldenummer: PCT/EP2024/050874
(87) Internationale Veröffentlichungsnummer: WO 2024/153621

(56) Entgegenhaltungen:
- EP-A1- 4 060 839
- WO-A1-2018/096136
- DE-A1- 102020 126 444
- DE-U1- 202011 003 316

## Beschreibung

Die Erfindung betrifft eine Leitungsdurchführung, eine Verwendung einer Leitungsdurchführung und ein Verfahren zur Bestückung einer Leitungsdurchführung.

Leitungsdurchführungen zur Durchführung beispielsweise von Kabeln durch eine Wandung sind aus dem Stand der Technik allgemein bekannt. So offenbart DE 10 2020 126 444 A1 eine Leitungsdurchführung mit einem Grundrahmen und einer Mehrzahl von Leitungsdurchführungsmodulen. Eine weitere Leitungsdurchführungen ist vom WO 2018/096136 A1 bekannt.

Nachteil der aus dem Stand der Technik bekannten Leitungsdurchführungen ist, dass die Montagehilfsmittel einzeln eingesetzt und nach der Montage der Einsatzmodule wieder entnommen werden müssen. Die Einsatzmodule sind dabei im montierten Zustand der Leitungsdurchführung nur durch die Vertikalstege im Rahmen stabilisiert.

Aufgabe der vorliegenden Erfindung ist es daher eine verbesserte Leitungsdurchführung, eine verbesserte Verwendung und ein verbessertes Verfahren zur Verfügung zu stellen. Insbesondere ist es Aufgabe der Erfindung eine Leitungsdurchführung, eine Verwendung und ein Verfahren zur Verfügung zu stellen, bei der Einsatzmodule flexibel in einen Rahmen einsetzbar sind und insbesondere eine verbesserte Stabilität im montierten Rahmen aufweisen. Die Aufgabe wird erfindungsgemäß gelöst mittels einer Leitungsdurchführung umfassend mindestens ein erstes Rahmenteil und mindestens ein zweites Rahmenteil sowie eine Anzahl von Einsatzmodulen, wobei das erste Rahmenteil zumindest einen Basissteg und zumindest zwei Vertikalstege umfasst, wobei das zweite Rahmenteil auf den Vertikalstegen zur Bildung zumindest eines umlaufenden Rahmens anordenbar ist, wobei zwischen zumindest zwei Vertikalstegen zumindest ein Montagehilfsmittel angeordnet ist, wobei das zumindest eine Montagehilfsmittel mit dem Basissteg materialverbunden ist und zumindest eine Sollbruchstelle aufweist, wobei an der Sollbruchstelle die Montagehilfsmittel vom ersten Rahmenteil trennbar und entnehmbar sind, so dass Einsatzmodule verschiedener Breite in die Leitungsdurchführung einsetzbar sind.

Weiterhin wird die Aufgabe erfindungsgemäß gelöst mittels einer Verwendung einer oben beschriebenen Leitungsdurchführung zur Durchführung von Leitungen durch eine Wandung.

Weiterhin wird die Aufgabe erfindungsgemäß gelöst mittels eines Verfahrens zur Bestückung einer oben beschriebenen Leitungsdurchführung umfassend die Schritte
Bereitstellen eines ersten Rahmenteils, eines zweiten Rahmenteils sowie einer Anzahl von Einsatzmodulen,
Einsetzen zumindest eines Einsatzmodules zwischen zwei Vertikalstegen des ersten Rahmenteiles oder zwischen einem Vertikalsteg und einem Montagehilfsmittel des ersten Rahmenteiles oder zwischen zwei Montagehilfsmitteln des ersten Rahmenteils, wobei vorab zumindest ein Montagehilfsmittel an einer Sollbruchstelle aus dem ersten Rahmenteil entnommen wird, wenn ein Abstand zwischen einem Vertikalsteg und einem Montagehilfsmittel oder zwischen zwei Montagehilfsmitteln kleiner ist als eine nominale Breite eines Einsatzmodules,
Anordnen des zweiten Rahmenteils auf den Vertikalstegen des ersten Rahmenteils.

Es wird eine Leitungsdurchführung umfassend mindestens ein erstes Rahmenteil und mindestens ein zweites Rahmenteil sowie eine Anzahl von Einsatzmodulen vorgeschlagen. Das erste Rahmenteil umfasst zumindest einen Basissteg und zumindest zwei Vertikalstege, wobei das zweite Rahmenteil auf den Vertikalstegen zur Bildung zumindest eines umlaufenden Rahmens anordenbar ist. Zwischen zumindest zwei Vertikalstegen ist zumindest ein Montagehilfsmittel angeordnet, wobei das zumindest eine Montagehilfsmittel mit dem Basissteg materialverbunden ist und zumindest eine Sollbruchstelle aufweist, wobei an der Sollbruchstelle die Montagehilfsmittel vom ersten Rahmenteil trennbar und entnehmbar sind, so dass Einsatzmodule verschiedener Breite in die Leitungsdurchführung einsetzbar sind.

Vorteilhaft können mittels der vorgeschlagenen Leitungsdurchführung Langformteile, wie beispielsweise elektrische Leitungen, Pneumatikschläuche, Hydraulikschläuche und/oder Lichtwellenleiter schnell, einfach und vor allem platzsparend beispielsweise in Schaltschränke, Gehäuse oder Maschinen eingeführt werden. Besonders vorteilhaft sind an die durchzuführenden Langformteile angepasste Einsatzmodule in die Leitungsdurchführung einsetzbar. Mittels der Sollbruchstelle ist das jeweilige Montagehilfsmittel vom ersten Rahmenteil entnehmbar beziehungsweise herausbrechbar. An der Sollbruchstelle können die Montagehilfsmittel vom ersten Rahmenteil getrennt und entnommen werden, sodass Einsatzmodule verschiedener Breite in die Leitungsdurchführung einsetzbar sind. Die Montagehilfsmittel sind materialverbunden unverlierbar am Basissteg angeordnet. Vorteilhaft können die Montagehilfsmittel bei Bedarf einfach und bevorzugt werkzeugfrei vom ersten Rahmenteil getrennt beziehungsweise an der Sollbruchstelle herausgebrochen werden. Weiterhin vorteilhaft verbessern die Montagehilfsmittel die Stabilität der montierten Leitungsdurchführung.

Beispielhafte Aufzählungen sind im Sinne der Erfindung als nicht abschließend anzusehen, sondern können im Rahmen des allgemeinen Fachwissens ergänzt werden.

Die Leitungsdurchführung umfasst ein erstes Rahmenteil. Das erste Rahmenteil umfasst einen Basissteg und zumindest zwei Vertikalstege. In einer Ausgestaltung umfasst das erste Rahmenteil mehr als zwei, bevorzugt drei oder vier Vertikalstege. Die Vertikalstege sind bevorzugt parallel zueinander angeordnet. Weiter bevorzugt ist vorgesehen, dass die Vertikalstege auf einer ersten Seite des Basissteges angeordnet sind. In einer Ausgestaltung ist vorgesehen, dass die Vertikalstege auf genau der ersten Seite des Basisstegs angeordnet sind. Bevorzugt umfassen die Vertikalstege jeweils eine Aufnahme für Befestigungsmittel. Bevorzugt kann mittels der Befestigungsmittel das zweite Rahmenteil auf den Vertikalstegen befestigt werden. Weiter bevorzugt sind die Befestigungsmittel als Schrauben ausgestaltet, mittels denen das zweite Rahmenteil auf den Vertikalstegen aufschraubbar ist.

In einer weiteren Ausgestaltung umfassen die Vertikalstege Befestigungsbohrungen. Bevorzugt ist die Leitungsdurchführung mittels der Befestigungsmittel, wie beispielsweise Schrauben oder Nieten, an einer Wandung, beispielsweise einer Wandung eines Gerätegehäuses, befestigbar. Vorteilhaft werden die Befestigungsmittel durch die Befestigungsbohrungen geführt, um die Leitungsdurchführung an der Wandung zu befestigen. Vorteilhaft sind die Vertikalstege derart ausgelegt, dass diese zusammen mit dem Basissteg und dem zweiten Rahmenteil einen vollständig umlaufenden Rahmen bilden.

In einer weiteren Ausgestaltung ist vorgesehen, dass zwei oder mehr als zwei, vorzugsweise drei bis fünf, weiter bevorzugt mehr als fünf Vertikalstege am Basissteg angeordnet sind. Vorteilhaft stützen die Vertikalstege das zweite Rahmenteil ab.

Das erste Rahmenteil umfasst zumindest ein Montagehilfsmittel. In einer Ausgestaltung ist vorgesehen, dass etwa ein bis etwa fünf Montagehilfsmittel vorgesehen sind. In einer Ausgestaltung ist vorgesehen, dass zwischen jeweils zwei Vertikalstegen etwa ein bis etwa fünf Montagehilfsmittel vorgesehen sind.

Wird im Rahmen der Erfindung der Begriff "etwa" im Zusammenhang mit Werten oder Wertebereichen verwendet, so ist darunter ein Toleranzbereich zu verstehen, den der Fachmann auf diesem Gebiet für üblich erachtet, insbesondere ist ein Toleranzbereich von ±20 %, bevorzugt ±10 %, weiter bevorzugt ±5 % vorgesehen.

Soweit verschiedene Wertebereiche, beispielsweise bevorzugte und weiter bevorzugte Wertebereiche, in der vorliegenden Erfindung angegeben sind, sind die Untergrenzen und die Obergrenzen der verschiedenen Wertebereiche miteinander kombinierbar.

Das zumindest eine Montagehilfsmittel ist materialverbunden am Basissteg befestigt. Materialverbunden im Sinne der Erfindung bedeutet, dass das Montagehilfsmittel mit dem Basissteg stoffschlüssig verbunden ist. Bevorzugt ist das Montagehilfsmittel mit dem Basissteg in einem Arbeitsgang gespritzt oder gegossen. Das Montagehilfsmittel kann aus dem gleichen oder einem unterschiedlichen Material wie der Basissteg sein. Bevorzugt umfasst das Montagehilfsmittel das gleiche Material wie der Basissteg und ist insbesondere monolithisch geformt. In einer weiteren Ausgestaltung umfasst das Montagehilfsmittel ein sich vom Material des Basissteges unterscheidendes Material. In einer Ausgestaltung ist zumindest das erste Rahmenteil in einem Mehrkomponenten-Spritzguss gefertigt.

Bevorzugt umfasst das Montagehilfsmittel zumindest einen Führungsabschnitt. Weiter bevorzugt umfassen die Vertikalstege jeweils zumindest einen Führungsabschnitt. Der Führungsabschnitt ist bevorzugt ein Abschnitt des Montagemittels, der zumindest ein Einsatzteil bei der Bestückung der Leitungsdurchführung führt und/oder hält. Bevorzugt ist ein Einsatzmodul zwischen zwei Führungsabschnitten in das erste Rahmenteil einsetzbar. In einer Ausgestaltung ist vorgesehen, dass zumindest ein Montagehilfsmittel einen Führungsabschnitt aufweist, der unmittelbar an den Basissteg grenzt. Vorteilhaft kann ein Einsatzmodul mittels des Führungsabschnittes bündig an den Basissteg geführt werden.

In einer Ausgestaltung ist vorgesehen, dass zumindest ein Montagehilfsmittel auf der vom Basissteg abgewandten Seite mindestens einen Steckkopf zur Steckverbindung mit dem zweiten Rahmenteil aufweist. Der mindestens eine Steckkopf ist beispielsweise als ein oder mehrere Zapfen, zumindest ein Rohr oder ein verjüngter Abschnitt ausgestaltet.

In einer Ausgestaltung ist vorgesehen, dass das Montagehilfsmittel keinen Steckkopf aufweist. Weiter bevorzugt ist vorgesehen, dass das Montagehilfsmittel keine Steckverbindung mit dem zweiten Rahmenteil umfasst. In einer Ausgestaltung ist vorgesehen, dass zumindest ein Montagehilfsmittel vom zweiten Rahmenteil beabstandet angeordnet ist. Hierdurch wird vorteilhaft eine Materialeinsparung erzielt. Weiterhin vorteilhaft ist die Montage des zweiten Rahmenteils auf das erste Rahmenteil einfacher, da lediglich Positionierelemente des zweiten Rahmenteils in Aufnahmen der Vertikalstege gefügt werden müssen. Dies beschleunigt die Montage der Leitungsdurchführung wesentlich.

Das Montagehilfsmittel umfasst zumindest eine Sollbruchstelle. Vorteilhaft ist das Montagehilfsmittel unverlierbar am ersten Rahmenteil gehalten. Weiterhin vorteilhaft kann das Montagehilfsmittel werkzeugfrei zumindest teilweise vom ersten Rahmenteil gelöst werden, sollte dies für die Bestückung des ersten Rahmenteils mit Einsatzmodulen notwendig sein. In einer Ausgestaltung ist vorgesehen, dass die Sollbruchstelle der Montagehilfsmittel eine Materialschwächung aufweist. Bevorzugt umfasst die Sollbruchstelle eine einseitige oder beidseitige Einkerbung oder Materialverjüngung. In einer weiteren Ausgestaltung umfasst die Sollbruchstelle eine Perforierung. Vorteilhaft kann das Montagehilfsmittel an der Sollbruchstelle aus dem ersten Rahmenteil herausgebrochen werden. Weiter bevorzugt kann das Montagehilfsmittel an der Sollbruchstelle gekürzt werden.

Beispielsweise sind die Montagehilfsmittel derart im ersten Rahmenteil angeordnet, dass jeweils zwischen den Vertikalstegen und einem Montagehilfsmittel und/oder zwischen zwei Montagehilfsmitteln ein erster Abstand vorhanden ist. Vorteilhaft kann mittels einer vorzugsweise werkzeugfreien Entnahme eines Montagehilfsmittels ein zweiter Abstand zwischen einem Vertikalsteg und einem Montagehilfsmittel, ein Abstand zwischen zwei Vertikalstegen oder ein Abstand zwischen zwei Montagehilfsmitteln geschaffen werden, der bevorzugt etwa doppelt so groß ist wie der erste Abstand. Die Entnahme weitere Montagehilfsmittel kann bevorzugt weitere Abstände schaffen.

In einer Ausgestaltung ist vorgesehen, dass die Sollbruchstelle unmittelbar an den Basissteg angrenzt. Nach dem Entnehmen des Montagehilfsmittels an der Sollbruchstelle kann am Basissteg eine Bruchstelle verbleiben. Die Bruchstelle ist bevorzugt im Wesentlichen eben mit einer ersten Oberfläche der ersten Seite des Basissteges. In einer weiteren Ausgestaltung ist vorgesehen, dass die Sollbruchstelle an einer vom Basissteg beabstandeten Stelle am Montagehilfsmittel angeordnet ist. Beispielsweise ist zumindest eine Sollbruchstelle etwa mittig am Montagehilfsmittel angeordnet. In einer Ausgestaltung ist vorgesehen, dass das Montagehilfsmittel zumindest zwei Sollbruchstellen umfasst. Vorteilhaft kann derart das Montagehilfsmittel nach Bedarf insbesondere werkzeugfrei gekürzt und/oder vollständig entnommen werden.

Der Begriff "im Wesentlichen" gibt einen Toleranzbereich an, der für den Fachmann unter wirtschaftlichen und technischen Gesichtspunkten zu vertreten ist, sodass das entsprechende Merkmal noch als solches zu erkennen oder verwirklicht ist.

Die Leitungsdurchführung umfasst mindestens ein zweites Rahmenteil. Vorteilhafterweise kann mittels des zweiten Rahmenteils das Einsatzteil oder die Einsatzteile, die im ersten Rahmenteil eingesetzt sind, gehalten werden. Das zweite Rahmenteil stabilisiert vorteilhaft die Leitungsdurchführung. Vorteilhaft ist das zweite Rahmenteil parallel zum ersten Rahmenteil auf den Vertikalstegen angeordnet. Weiterhin bevorzugt ist das zweite Rahmenteil auf den Vertikalstegen aufgeschraubt. Bevorzugt sind Befestigungsmittel vorgesehen, um das zweite Rahmenteil auf den Vertikalstegen anzuordnen. Weiter bevorzugt werden die Befestigungsmittel durch Aufnahmen des zweiten Rahmenteils geführt, um das zweite Rahmenteil beispielsweise mit dem ersten Rahmenteil zu verschrauben. In einer Ausgestaltung umfasst das zweite Rahmenteil zumindest eine Steckkopfaufnahme, insbesondere zur Aufnahme von zumindest einem Steckkopf zumindest eines Montagehilfsmittels.

In einer Ausgestaltung ist vorgesehen, dass das zweite Rahmenteil Positionierelemente aufweist, die bevorzugt den Aufnahmen der Vertikalstege zuordenbar sind. Bevorzugt sind die Positionierelemente den Aufnahmen für die Befestigungsmittel zugeordnet. Vorteilhaft kann mittels der Positionierelemente die Montage erleichtert werden, da mit diesen ein Fluchten der Aufnahmen des zweiten Rahmenteils und der Aufnahmen der Vertikalstege sicher gestellt werden kann.

Erfindungsgemäß ist vorgesehen, dass diese eine Anzahl von Einsatzmodulen aufweist. Vorteilhaft ist das erste Rahmenteil mit beispielsweise einem bis etwa zehn Einsatzmodulen bestückbar. In einer Ausgestaltung ist die Leitungsdurchführung als ein Set ausgestaltet, das zumindest das erste und zweite Rahmenteil sowie zumindest ein Einsatzmodul aufweist. Das Set kann eine Mehrzahl von Einsatzmodulen, bevorzugt ein Einsatzmodul bis etwa 20 Einsatzmodule, umfassen. In einer Ausgestaltung umfasst das Set eine Mehrzahl von Einsatzmodulen, die insbesondere für unterschiedliche Anwendungszwecke verwendbar sind. Bevorzugt umfasst das Set eine Anzahl von Einsatzmodulen, die nicht alle gleichzeitig in das erste Rahmenteil einsetzbar sind. Vorteilhaft kann bei der Bestückung des ersten Rahmenteils mit den Einsatzmodulen aus einer Vielzahl von verschiedenen Einsatzmodulen ausgewählt werden, um die Leitungsdurchführung an einen Einsatzzweck anzupassen. Das zumindest eine Einsatzmodul umfasst bevorzugt ein gummielastisches Material. Vorteilhaft kann durch das Einsatzmodul zumindest ein Langformteil geführt werden. In einer Ausgestaltung ist vorgesehen, dass die Einsatzmodule jeweils eine Anzahl von Langformteilaufnahmen aufweisen. In einer Ausgestaltung ist vorgesehen, dass zumindest ein Einsatzmodul keine Langformteilaufnahme aufweist. Vorteilhaft kann ein Einsatzmodul ohne Langformteilaufnahme als Blindstopfen verwendet werden.

Bevorzugt können Einsatzmodule unterschiedlicher Breite in das erste Rahmenteil eingesetzt werden. Bevorzugt können Einsatzmodule mit einer ersten Breite zwischen zwei Montagehilfsmittel, einem Montagehilfsmittel und einem Vertikalsteg oder zwei Vertikalstegen eingesetzt werden, die einen ersten Abstand voneinander aufweisen. Weiter bevorzugt können Einsatzmodule mit einer zweiten Breite zwischen zwei Montagehilfsmittel, einem Montagehilfsmittel und einem Vertikalsteg oder zwei Vertikalstegen eingesetzt werden, die einen zweiten Abstand voneinander aufweisen.

Bevorzugt ist zumindest ein Einsatzmodul in das erste Rahmenteil eingesetzt. Weiter bevorzugt ist das erste Rahmenteil mit einer Vielzahl von Einsatzmodulen bestückt. Bevorzugt ist das erste Rahmenteil derart mit Einsatzmodulen bestückt beziehungsweise bestückbar, dass diese einen Zwischenraum zwischen Basissteg und zweitem Rahmenteil im Wesentlichen vollständig ausfüllen.

Eine beispielhafte Leitungsdurchführung umfasst ein erstes Rahmenteil mit einem Basissteg und drei Vertikalstegen, die auf einer ersten Seite des Basissteges angeordnet sind. Zwischen einem ersten Vertikalsteg und einem zweiten Vertikalsteg sind beispielhaft zwei Montagehilfsmittel angeordnet. Zwischen dem zweiten Vertikalsteg und einem dritten Vertikalsteg ist beispielhaft ein drittes Montagehilfsmittel angeordnet. Ein zweites Rahmenteil, das auf die Vertikalstege aufsetzbar ist, umfasst beispielhaft Aufnahmen für Befestigungsmittel, die beispielhaft als Schrauben ausgebildet sind. Den Aufnahmen sind Positionierelemente zugeordnet, die jeweils in Aufnahmen auf den Stirnseiten der Vertikalstege einsetzbar sind. Die Aufnahmen der Vertikalstege umfassen jeweils Innengewinde, in die die Befestigungsmittel einschraubbar sind. Die äußeren Vertikalstege, das heißt der erste Vertikalsteg und der dritte Vertikalsteg, umfassen beispielhaft Befestigungsbohrungen, mittels denen das erste Rahmenteil beziehungsweise die Leitungsdurchführung an einer Wandung, beispielsweise eines Gehäuses, befestigbar ist, beispielsweise mitteln Schrauben oder Nieten.

Das mindestens eine Montagehilfsmittel ist materialverbunden am Basissteg angeordnet. Das Montagehilfsmittel umfasst beispielhaft einen Führungsabschnitt, der an den Basissteg grenzt. Weiterhin umfasst das Montagehilfsmittel beispielhaft einen Steckkopf, der an der vom Basissteg abgewandten Seite angeordnet ist. Steckköpfe der Montagehilfsmittel greifen in Steckkopfaufnahmen des zweiten Rahmenteils ein. Das Montagehilfsmittel umfasst des Weiteren eine Sollbruchstelle, die beispielhaft unmittelbar dem Basissteg zugeordnet ist. Die Sollbruchstelle ist beispielhaft als einseitige Einkerbung ausgestaltet, die das Material des Montagehilfsmittels definiert schwächt, sodass dieses werkzeugfrei aus dem ersten Rahmenteil entnehmbar ist.

Ist das zweite Rahmenteil auf die Vertikalstege des ersten Rahmenteils montiert, ist ein umlaufender Rahmen gebildet.

Die als beispielhaft einseitige Einkerbung ausgestaltete Sollbruchstelle ist beispielhaft derart gestaltet, dass diese eben in die erste Seite des Basisstegs übergeht. Die Sollbruchstelle erstreckt sich beispielhaft etwa über die Hälfte der Breite des Montagemittels, sodass ein werkzeugfreies Lösen des Montagemittels komfortabel möglich ist.

Das erste Rahmenteil kann mit Einsatzmodulen bestückt werden, die zwischen die Vertikalstege respektive die Montagehilfsmittel eingesetzt sind. Die Einsatzmodule sind für unterschiedliche Langformteile ausgestaltet. So umfassen beispielhaft einige der Einsatzmodule jeweils eine Langformteilaufnahme. Andere Langformteilaufnahmen weisen unterschiedliche Dimensionierung der Durchmesser der Langformteilaufnahmen auf. Einige Einsatzmodule umfassen zwei Langformteilaufnahmen. Weiterhin umfassen einige Einsatzmodule jeweils mehr als zwei beispielsweise etwa drei oder vier Langformteilaufnahmen. Beispielhaft umfassen einige Einsatzmodule keinerlei Langformteilaufnahmen oder Öffnungen und sind beispielsweise als Blindstopfen einsetzbar. Die Montagehilfsmittel vereinfachen die exakte Positionierung der Einsatzmodule bei der Montage und bieten weiterhin vorteilhaft zusätzlich eine hohe Stabilität im montierten Zustand. Beispielhaft sind Einsatzmodule mit unterschiedlichen Breiten und/oder Höhen in das erste Rahmenteil einsetzbar.

In einer weiteren beispielhaften Ausgestaltung der Leitungsdurchführung ist vorgesehen, dass die Montagehilfsmittel keinen Steckkopf aufweisen, der in das zweite Rahmenteil eingreift. Die Montagehilfsmittel reichen nah bis an das zweite Rahmenteil heran, berühren es aber auch dann nicht, wenn das zweite Rahmenteil auf dem ersten Rahmenteil montiert ist. Insbesondere weist das Montagehilfsmittel einen Abstand zum zweiten Rahmenteil auf. Durch diese Ausgestaltung brauchen die Montagehilfsmittel nicht exakt in Steckaufnahmen des zweiten Rahmenteils gefädelt werden, so dass eine Montage wesentlich vereinfacht wird.

Weiterhin wird eine Verwendung einer oben beschriebenen Leitungsdurchführung zur Durchführung von Leitungen durch eine Wandung vorgeschlagen. Insbesondere wird die Leitungsdurchführung mit einer Anzahl unterschiedlicher Einsatzmodule verwendet.

Weiterhin wird ein Verfahren zur Bestückung einer oben beschriebenen Leitungsdurchführung vorgeschlagen, umfassend die Schritte
- Bereitstellen eines ersten Rahmenteils, eines zweiten Rahmenteils sowie einer Anzahl von Einsatzmodulen,
- Einsetzen zumindest eines Einsatzmodules zwischen zwei Vertikalstegen des ersten Rahmenteiles oder zwischen einem Vertikalsteg und einem Montagehilfsmittel des ersten Rahmenteiles oder zwischen zwei Montagehilfsmitteln des ersten Rahmenteils, wobei vorab zumindest ein Montagehilfsmittel an einer Sollbruchstelle aus dem ersten Rahmenteil entnommen wird, wenn ein Abstand zwischen einem Vertikalsteg und einem Montagehilfsmittel oder ein Abstand zwischen zwei Montagehilfsmitteln kleiner ist als eine nominale Breite eines Einsatzmodules,
- Anordnen des zweiten Rahmenteils auf den Vertikalstegen des ersten Rahmenteils.

Im Sinne der Erfindung ist ein Abstand zwischen zwei Montagehilfsmitteln kleiner ist als eine nominale Breite eines Einsatzmodules, wenn der Abstand zumindest etwa 5 %, bevorzugt zumindest etwa 10 %, weiter bevorzugt zumindest etwa 25 %, weiter bevorzugt zumindest etwa 25 % bis etwa 90 %, weiter bevorzugt etwa 25 % bist etwa 75 % kleiner ist als die nominale Breite des Einsatzmodules.

In einer Ausgestaltung ist vorgesehen, dass das Einsatzmodul eine nominale Breite aufweist, die etwa 1 % bis etwa 5 % größer ist als der Abstand zwischen einem Vertikalsteg und einem Montagehilfsmittel oder ein Abstand zwischen zwei Montagehilfsmitteln. Bevorzugt wird das Einsatzmodul unter Vorspannung zwischen einem Vertikalsteg und einem Montagehilfsmittel oder ein Abstand zwischen zwei Montagehilfsmitteln eingesetzt.

Weitere vorteilhafte Ausgestaltungen gehen aus den nachfolgenden Zeichnungen hervor. Die dort dargestellten Weiterbildungen sind jedoch nicht beschränkend auszulegen, vielmehr können die dort beschriebenen Merkmale untereinander und mit den oben beschriebenen Merkmalen zu weiteren Ausgestaltungen kombiniert werden. Des Weiteren sei darauf verwiesen, dass die in der Figurenbeschreibung angegebenen Bezugszeichen den Schutzbereich der vorliegenden Erfindung nicht beschränken, sondern lediglich auf die in den Figuren gezeigten Ausführungsbeispiele verweisen. Gleiche Teile oder Teile mit gleicher Funktion weisen im Folgenden die gleichen Bezugszeichen auf. Es zeigen:
- Fig. 1: eine Leitungsdurchführung in einer Explosionsansicht;
- Fig. 2: ein Detail II der Leitungsdurchführung aus Fig. 1;
- Fig. 3: die Leitungsdurchführung aus Fig. 1 in einer Frontansicht;
- Fig. 4: ein Detail IV aus Fig. 3;
- Fig. 5: die Leitungsdurchführung aus Fig. 1 bestückt mit Einsatzmodulen;
- Fig. 6: eine weitere Ausgestaltung der Leitungsdurchführung in einer Explosionsansicht;
- Fig. 7: eine Frontansicht der Leitungsdurchführung aus Fig. 6;
- Fig. 8: ein Detail VIII aus Fig. 7;
- Fig. 9: ein erstes Rahmenteil der Leitungsdurchführung aus Fig. 7 mit entnommenen Montagehilfsmittel; und
- Fig. 10: die Leitungsdurchführung aus Fig. 9 bestückt mit Einsatzmodulen.

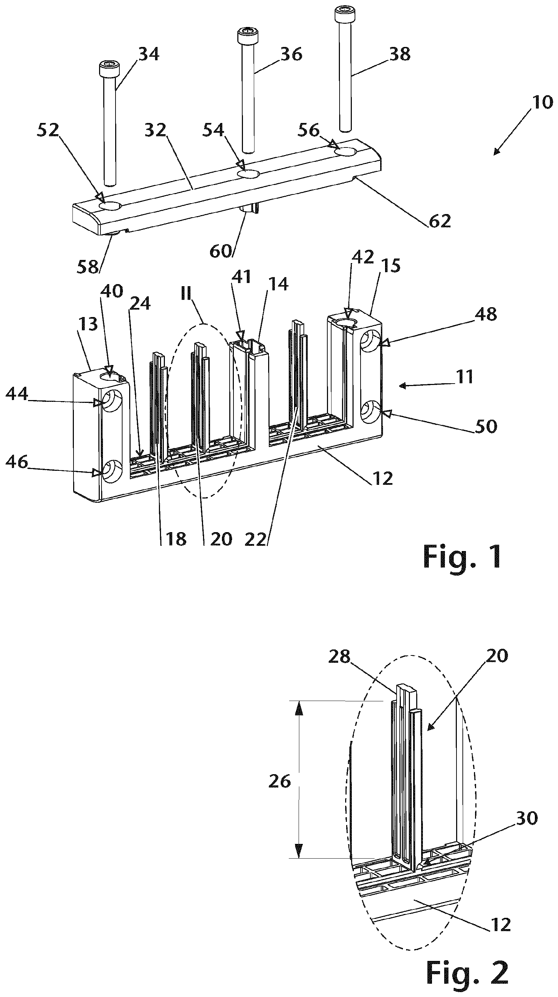

Fig. 1 zeigt eine Leitungsdurchführung 10 in einer Explosionsansicht. Die Leitungsdurchführung 10 umfasst ein erstes Rahmenteil 11 mit einem Basissteg 12 und drei Vertikalstegen 13, 14 und 15, die auf einer ersten Seite 24 des Basissteges 12 angeordnet sind. Zwischen den Vertikalstegen 13 und 14 sind zwei Montagehilfsmittel 18 und 20 angeordnet. Zwischen den Vertikalstegen 14 und 15 ist ein weiteres Montagehilfsmittel 22 angeordnet. Ein zweites Rahmenteil 32, das auf die Vertikalstege 13, 14 und 15 aufsetzbar ist, umfasst Aufnahmen 52, 54 und 56 für Befestigungsmittel 34, 36 und 38, die als Schrauben ausgebildet sind. Den Aufnahmen 52, 54 und 56 sind Positionierelemente 58, 60 und 62 zugeordnet, die in Aufnahmen 40, 41 und 42 der Vertikalstege 13, 14 und 15 einsetzbar sind. Die Aufnahmen 40, 41 und42 umfassen jeweils ein nicht sichtbares Innengewinde, in die die Befestigungsmittel 34, 36 und 38 einschraubbar sind. Die Vertikalstege 13 und 15 umfassen zudem Befestigungsbohrungen 44, 46, 48, 50, mittels denen der erste Rahmenteil 11 beziehungsweise die Leitungsdurchführung 10 an einer Wandung befestigbar ist, beispielsweise mitteln Schrauben oder Nieten.

Fig. 2 zeigt im Detail II der Fig. 1 das Montagehilfsmittel 20. Dieses ist materialverbunden am Basissteg 12 angeordnet. Das Montagehilfsmittel 20 umfasst einen Führungsabschnitt 26, der an den Basissteg 12 grenzt. Weiterhin umfasst das Montagehilfsmittel 20 einen Stecckopf 28, der an der vom Basissteg 12 abgewandten angeordnet ist. Das Montagehilfsmittel 20 umfasst des Weiteren eine Sollbruchstelle 30, die unmittelbar dem Basissteg 12 zugeordnet ist. Die Sollbruchstelle 30 ist als einseitige Einkerbung ausgestaltet, die das Material des Montagehilfsmittels 20 definiert schwächt, sodass dieses werkzeugfrei aus dem ersten Rahmenteil 11 entnehmbar ist.

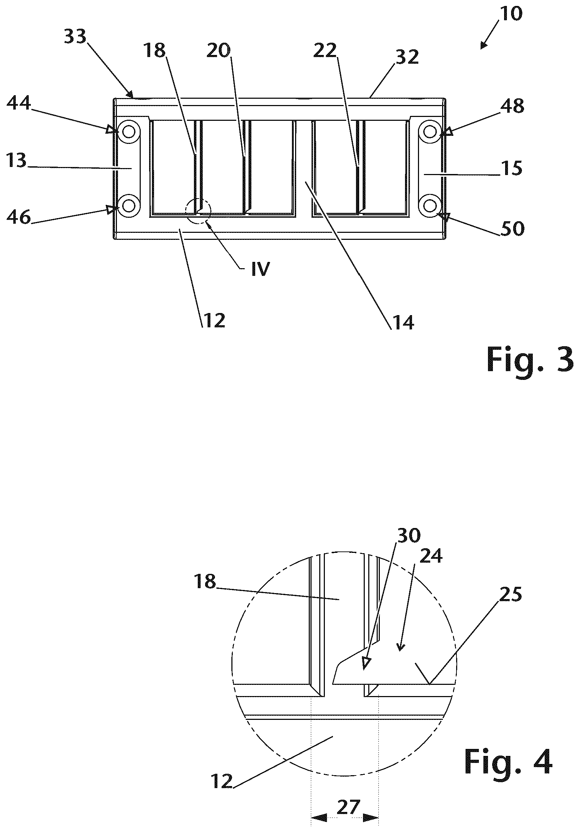

Fig. 3 zeigt die Leitungsdurchführung aus Fig. 1 in einer Frontansicht. In dieser Ansicht ist das zweite Rahmenteil 32 auf die Vertikalstege 13, 14 und 15 montiert, so dass ein umlaufender Rahmen 33 gebildet wird. Weiterhin sind in Fig. 3 die Montagehilfsmittel 18, 20 und 22 erkennbar, die zwischen den Vertikalstegen 13, 14 und 15 angeordnet sind. Die hier nicht sichtbaren Steckköpfe der Montagehilfsmittel greifen in hier nicht sichtbare Steckkopfaufnahmen des zweiten Rahmenteils 32 ein. Weiterhin umfasst das erste Rahmenteil 11 die Befestigungsbohrungen 44, 46, 48 und 50, die in den Vertikalstegen 13 und 15 angeordnet sind.

Fig. 4 zeigt ein Detail IV aus Fig. 3. Insbesondere wird ein Übergang des Basissteges 12 in das Montagehilfsmittel 18 gezeigt. Die als einseitige Einkerbung ausgestaltete Sollbruchstelle 30 ist derart gestaltet, dass diese eben in eine Oberfläche 25 der erste Seite 24 des Basissteges 12 übergeht. Die Sollbruchstelle 30 erstreckt sich etwa über die Hälfte der Breite 27 des Montagehilfsmittels 18, sodass ein werkzeugfreies Lösen des Montagemittels 18 komfortabel möglich ist.

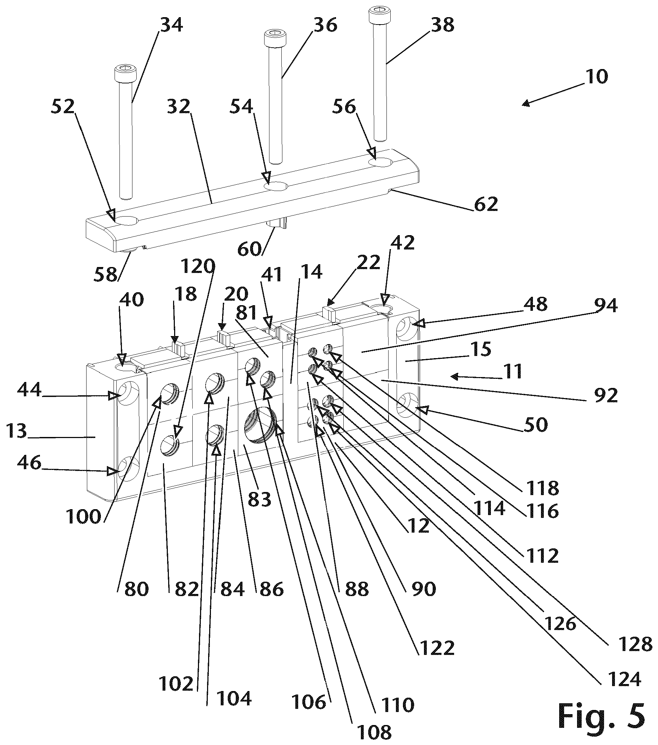

Fig. 5 zeigt die Leitungsdurchführung 10 aus Fig. 1 bestückt mit Einsatzmodulen 80, 81, 82, 83, 84, 86, 88, 90, 92 und 94 die zwischen die Vertikalstege 13, 14 und 15 respektive die Montagehilfsmittel 18, 20 und 22 eingesetzt sind. Die Einsatzmodule 80, 81, 82, 83, 84, 86, 88, 90, 92 und 94 sind für eine Durchführung unterschiedlicher Langformteile, die nicht in den Fig. gezeigt sind, ausgestaltet. So umfassen die Einsatzmodule 80, 82, 84, 86 und 83 jeweils eine Langformteilaufnahme 100, 120, 102, 104 und 110. Die Langformteilaufnahme 110 weist eine unterschiedliche Dimensionierung als die Langformteilaufnahmen 100, 120, 102 und 104 auf. Das Einsatzmodul 81 umfass zwei Langformteilaufnahmen 106 und 108. Weiterhin umfassen die Einsatzmodule 88 und 90 jeweils vier Langformteilaufnahmen 112, 114, 116, 118, 122, 124, 126 und 128. Die Einsatzmodule 92 und 94 umfassen keinerlei Langformteilaufnahmen oder Öffnungen und sind beispielsweise als Blindstopfen eingesetzt. Die Montagehilfsmittel 18, 20 und 22 vereinfachen die exakte Positionierung der Einsatzmodule 80, 81, 82, 83, 84, 86, 88, 90, 92 und 94 bei der Montage.

Das zweite Rahmenteil 32, das auf die Vertikalstege 13, 14 und 15 aufsetzbar ist, umfasst Aufnahmen 52, 54 und 56 für Befestigungsmittel 34, 36 und 38, die als Schrauben ausgebildet sind. Den Aufnahmen 52, 54 und 56 sind Positionierelemente 58, 60 und 62 zugeordnet, die in Aufnahmen 40, 41 und 42 der Vertikalstege 13, 14 und 15 einsetzbar sind. Die Aufnahmen 40, 41, 42 umfassen jeweils ein nicht sichtbares Innengewinde, in die die Befestigungsmittel 34, 36 und 38 einschraubbar sind. Die Vertikalstege 13 und 15 umfassen zudem Befestigungsbohrungen 44, 46, 48, 50, mittels denen das erste Rahmenteil 11 beziehungsweise die Leitungsdurchführung 10 an einer Wandung befestigbar ist, beispielsweise mitteln Schrauben oder Nieten.

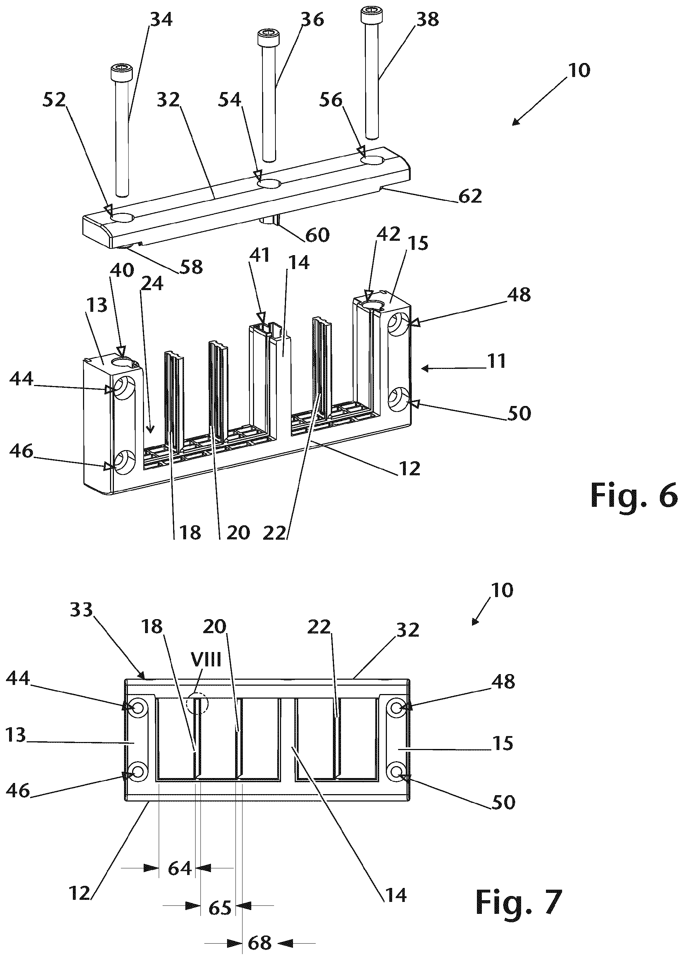

Fig. 6 zeigt eine weitere Ausgestaltung der Leitungsdurchführung in einer Explosionsansicht. Die Leitungsdurchführung 10 umfasst ein erstes Rahmenteil 11 mit einem Basissteg 12 und drei Vertikalstegen 13, 14 und 15, die auf einer ersten Seite 24 des Basissteges 12 angeordnet sind. Zwischen den Vertikalstegen 13 und 14 sind zwei Montagehilfsmittel 18 und 20 angeordnet. Zwischen den Vertikalstegen 14 und 15 ist ein weiteres Montagehilfsmittel 22 angeordnet. Im Unterschied zu der vorhergehenden Ausführung weisen die Montagehilfsmittel 18, 20 und 22 keinen Steckkopf auf, der in das zweite Rahmenteil 32 eingreift.

Ein zweites Rahmenteil 32, das auf die Vertikalstege 13, 14 und 15 aufsetzbar ist, umfasst Aufnahmen 52, 54 und 56 für Befestigungsmittel 34, 36 und 38, die als Schrauben ausgebildet sind. Den Aufnahmen 52, 54 und 56 sind Positionierelemente 58, 60 und 62 zugeordnet, die in Aufnahmen 40, 41 und 42 der Vertikalstege 13, 14 und 15 einsetzbar sind. Die Aufnahmen 40, 41, 42 umfassen jeweils ein nicht sichtbares Innengewinde, in die die Befestigungsmittel 34, 36 und 38 einschraubbar sind. Die Vertikalstege 13 und 15 umfassen zudem Befestigungsbohrungen 44, 46, 48, 50, mittels denen das erste Rahmenteil 11 beziehungsweise die Leitungsdurchführung 10 an einer Wandung befestigbar ist, beispielsweise mitteln Schrauben oder Nieten.

Fig. 7 zeigt eine Frontansicht der Leitungsdurchführung aus Fig. 6. Das zweite Rahmenteil 32 ist auf die Vertikalstege 13, 14 und 15 montiert, so dass ein umlaufender Rahmen 33 gebildet wird. Weiterhin sind die Montagehilfsmittel 18, 20 und 22 zwischen den Vertikalstegen 13, 14 und 15 angeordnet. Zwischen dem Vertikalsteg 13 und dem Montagehilfsmittel 18 befindet sich ein Abstand 64. Zwischen dem Montagehilfsmittel 18 und dem Montagehilfsmittel 20 befindet sich ebenfalls ein Abstand 65, der etwa gleich groß ist wie der Abstand 64. Zwischen dem Montagehilfsmittel 20 und dem Vertikalsteg 14 befindet sich ein Abstand 68, der etwa gleich groß ist wie der Abstand 64. Die Abstände 64, 65 und 68 werden im Folgenden alle als erster Abstand bezeichnet, da diese etwa gleich groß sind. Die Montagehilfsmittel 18, 20 und 22 reichen nah bis an das zweite Rahmenteil heran. Weiterhin umfasst das erste Rahmenteil 11 die Befestigungsbohrungen 44, 46, 48 und 50, die durchgehend in den Vertikalstegen 13 und 15 angeordnet sind.

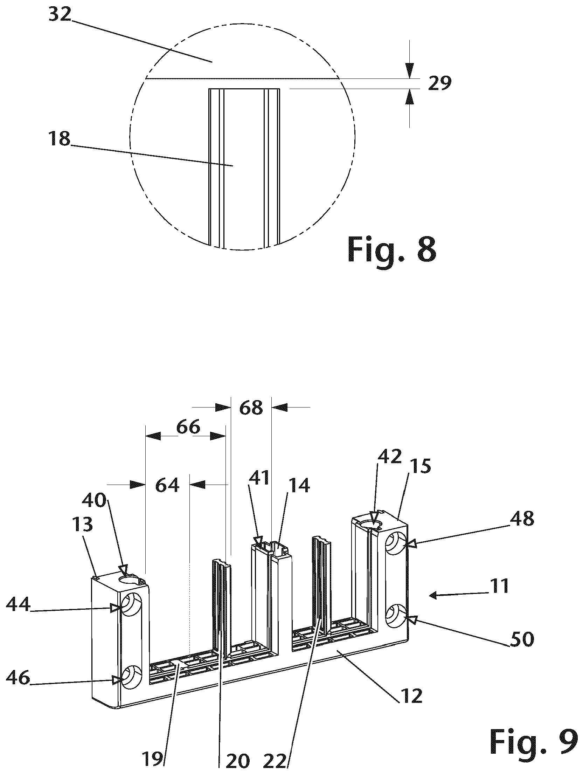

Fig. 8 zeigt ein Detail VIII aus Fig. 7. Das Montagehilfsmittel 18 weist, auch wenn das zweite Rahmenteil 32 auf dem ersten Rahmenteil montiert ist, einen Abstand 29 zum zweiten Rahmenteil 32 auf. Durch diese Ausgestaltung brauchen die Montagehilfsmittel nicht exakt in Steckaufnahmen des zweiten Rahmenteils 32 gefädelt werden, so dass eine Montage wesentlich vereinfacht wird.

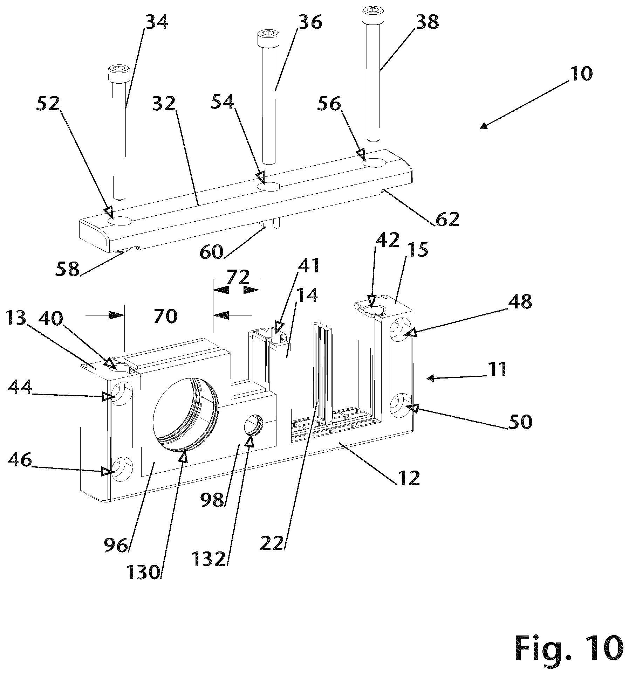

Fig. 9 zeigt ein erstes Rahmenteil 11 der Leitungsdurchführung 10 aus Fig. 7 mit entnommenen Montagehilfsmittel 18. Die Bruchstelle 19 am Basissteg 12 ist im Wesentlichen eben ausgebildet und behindert die Bestückung mit beispielsweise in Fig. 10 gezeigten Einsatzmodulen nicht. Durch das Herauslösen des Montagehilfsmittels 18 wurde ein erster Abstand 64 für ein Einsatzelement zwischen Vertikalsteg 13 und Montagehilfsmittel 18 auf einen zweiten Abstand 66 zwischen Vertikalsteg 13 und dem Montagehilfsmittel 14 vergrößert. Der erste Abstand 68 zwischen dem Montagehilfsmittel 20 und dem Vertikalsteg 14 bleibt unverändert. In Fig. 9 verbleibt auch das Montagehilfsmittel 22 zwischen den Vertikalstegen 14 und 15.

Die Vertikalstege 13, 14 und 15 umfassen Aufnahmen 40, 41 und 42. Weiterhin umfasst das erste Rahmenteil 11 die Befestigungsbohrungen 44, 46, 48 und 50, die durchgehend in den Vertikalstegen 13 und 15 angeordnet sind.

Fig. 10 zeigt die Leitungsdurchführung 10 aus Fig. 9 teilbestückt mit Einsatzmodulen 96 und 98. Ein Einsatzmodul 96 weist eine definierte nominale Breite 70 auf, die für den zweiten Abstand 66 zwischen dem Vertikalsteg 13 und dem Montagehilfsmittel 20, das in Fig. 9 sichtbar ist, vorgesehen ist. Das Einsatzmodul 96 umfasst eine Langformteilaufnahme 130. Neben dem Einsatzmodul 96 ist ein weiteres Einsatzmodul 98 mit einer Langformteilaufnahme 132 in das erste Rahmenteil 11 zwischen dem Montagehilfsmittel 20 und dem Vertikalsteg 14 eingesetzt. Die Leitungsdurchführung 10 kann teilbestückt verwendet werden. Bevorzugt wird diese jedoch vollständig bestückt, um ein Verrutschen der Einsatzmodule zu verhindern beziehungsweise ein Gehäuse, auf dem die Leitungsdurchführung 10 montiert wird, dichtend abzuschließen.

Zwischen den Vertikalstegen 14 und 15 ist ein weiteres Montagehilfsmittel 22 angeordnet. Ein zweites Rahmenteil 32, das auf die Vertikalstege 13, 14 und 15 aufsetzbar ist, umfasst Aufnahmen 52, 54 und 56 für Befestigungsmittel 34, 36 und 38, die als Schrauben ausgebildet sind. Den Aufnahmen 52, 54 und 56 sind Positionierelemente 58, 60 und 62 zugeordnet, die in Aufnahmen 40, 41 und 42 der Vertikalstege 13, 14 und 15 einsetzbar sind. Die Aufnahmen 40, 41, 42 umfassen jeweils ein nicht sichtbares Innengewinde, in die die Befestigungsmittel 34, 36 und 38 einschraubbar sind. Die Vertikalstege 13 und 15 umfassen zudem Befestigungsbohrungen 44, 46, 48, 50, mittels denen das erste Rahmenteil 11 beziehungsweise die Leitungsdurchführung 10 an einer Wandung befestigbar ist.

Vorteilhafterweise kann mittels des zumindest einen werkzeugfrei herauslösbaren Montagehilfsmittels 18, 20, 22 eine Leitungsdurchführung 10 auf unterschiedliche Einsatzmodule angepasst werden.

## Patentansprüche

1. Leitungsdurchführung (10) umfassend mindestens ein erstes Rahmenteil (11) und mindestens ein zweites Rahmenteil (32) sowie eine Anzahl von Einsatzmodulen (80, 82, 84, 86, 88, 90, 92, 94, 96), wobei das erste Rahmenteil (11) zumindest einen Basissteg (12) und zumindest zwei Vertikalstege (13, 14, 15) umfasst, welche sich senkrecht vom Basissteg (12) erstrecken, wobei das zweite Rahmenteil (32) auf den Vertikalstegen (13, 14, 15) zur Bildung zumindest eines umlaufenden Rahmens (33) anordenbar ist, wobei zwischen zumindest zwei Vertikalstegen (13, 14, 15) zumindest ein Montagehilfsmittel (18, 20, 22) angeordnet ist, **dadurch gekennzeichnet, dass** das zumindest eine Montagehilfsmittel (18, 20, 22) mit dem Basissteg (12) materialverbunden ist und zumindest eine Sollbruchstelle (30) aufweist, wobei an der Sollbruchstelle (30) die Montagehilfsmittel (18, 20, 22) vom ersten Rahmenteil (11) trennbar und entnehmbar sind, so dass Einsatzmodule (80, 82, 84, 86, 88, 90, 92, 94, 96) verschiedener Breite in die Leitungsdurchführung (10) einsetzbar sind .

2. Leitungsdurchführung (10) nach Anspruch 1, **dadurch gekennzeichnet, dass** die Vertikalstege (13, 14, 15) auf genau einer ersten Seite (24) des Basisstegs (12) angeordnet sind.

3. Leitungsdurchführung (10) nach einem oder mehreren der vorhergehenden Ansprüche, **dadurch gekennzeichnet, dass** die Sollbruchstelle (30) der Montagehilfsmittel (18, 20, 22) eine Materialschwächung aufweist.

4. Leitungsdurchführung (10) nach einem oder mehreren der vorhergehenden Ansprüche, **dadurch gekennzeichnet, dass** die Sollbruchstelle (30) unmittelbar an den Basissteg (12) angrenzt.

5. Leitungsdurchführung (10) nach einem oder mehreren der vorhergehenden Ansprüche, **dadurch gekennzeichnet, dass** zumindest ein Montagehilfsmittel (18, 20, 22) einen Führungsabschnitt (26) aufweist, der unmittelbar an den Basissteg (12) grenzt.

6. Leitungsdurchführung (10) nach einem oder mehreren der vorhergehenden Ansprüche, **dadurch gekennzeichnet, dass** zumindest ein Montagehilfsmittel (18, 20, 22) auf der vom Basissteg (12) abgewandten Seite einen Steckkopf zur Steckverbindung mit dem zweiten Rahmenteil (32) aufweist.

7. Leitungsdurchführung (10) nach einem oder mehreren der Ansprüche 1 bis 5, **dadurch gekennzeichnet, dass** zumindest ein Montagehilfsmittel (18, 20, 22) vom zweiten Rahmenteil (32) beabstandet angeordnet ist.

8. Leitungsdurchführung (10) nach einem oder mehreren der vorhergehenden Ansprüche, **dadurch gekennzeichnet, dass** die Einsatzmodule (80, 82, 84, 86, 88, 90, 92, 94, 96) jeweils eine Anzahl von Langformteilaufnahmen (100, 102, 104, 106, 108, 110, 112, 114, 116, 120, 122, 124, 126, 128, 130) aufweisen.

9. Verwendung einer Leitungsdurchführung (10) nach einem oder mehreren der vorhergehenden Ansprüche zur Durchführung von Leitungen durch eine Wandung.

10. Verfahren zur Bestückung einer Leitungsdurchführung (10) nach einem oder mehreren der Ansprüche 1 bis 8, umfassend die Schritte
- Bereitstellen eines ersten Rahmenteils (11), eines zweiten Rahmenteils (32) sowie einer Anzahl von Einsatzmodulen (80, 82, 84, 86, 88, 90, 92, 94, 96),
- Einsetzen zumindest eines Einsatzmodules (80, 82, 84, 86, 88, 90, 92, 94, 96) zwischen zwei Vertikalstegen (13, 14, 15) des ersten Rahmenteiles (11) oder zwischen einem Vertikalsteg (13, 14, 15) und einem Montagehilfsmittel (18, 20, 22) des ersten Rahmenteiles (11) oder zwischen zwei Montagehilfsmitteln (18, 20, 22) des ersten Rahmenteils (11), wobei vorab zumindest ein Montagehilfsmittel (18, 20, 22) an einer Sollbruchstelle (30) aus dem ersten Rahmenteil (11) entnommen wird, wenn ein Abstand (64, 66, 68) zwischen einem Vertikalsteg (13, 14, 15) und einem Montagehilfsmittel (18, 20, 22) oder ein Abstand (65) zwischen zwei Montagehilfsmitteln (18, 20, 22) kleiner ist als eine nominale Breite (70, 72) eines Einsatzmodules (80, 82, 84, 86, 88, 90, 92, 94, 96),
- Anordnen des zweiten Rahmenteils (32) auf den Vertikalstegen (13, 14, 15) des ersten Rahmenteils (11).

## Claims

1. Conduit feed-through (10) comprising at least one first frame part (11) and at least one second frame part (32) as well as a number of insert modules (80, 82, 84, 86, 88, 90, 92, 94, 96), wherein the first frame part (11) comprises at least one base web (12) and at least two vertical webs (13, 14, 15) which extend vertically from the base web (12), wherein the second frame part (32) can be arranged on the vertical webs (13, 14, 15) to form at least one circumferential frame (33), wherein at least one assembly aid (18, 20, 22) is arranged between the at least two vertical webs (13, 14, 15), **characterized in that** the at least one assembly aid (18, 20, 22) is material-connected to the base web (12) and has at least one predetermined breaking point (30), wherein the assembly aids (18, 20, 22) can be separated from and removed from the first frame part (11) at the predetermined breaking point (30), so that insert modules (80, 82, 84, 86, 88, 90, 92, 94, 96) of different widths can be inserted into the conduit feed-through (10)..

2. Conduit feed-through (10) according to claim 1, **characterized in that** that the vertical webs (13, 14, 15) are arranged on exactly one first side (24) of the base web (12) .

3. Conduit feed-through (10) according to one or more of the preceding claims, **characterized in that** the predetermined breaking point (30) of the assembly aids (18, 20, 22) has a material weakening.

4. Conduit feed-through (10) according to one or more of the preceding claims, **characterized in that** the predetermined breaking point (30) is directly adjacent to the base web (12).

5. Conduit feed-through (10) according to one or more of the preceding claims, **characterized in that** at least one assembly aid (18, 20, 22) has a guide section (26) which directly adjoins the base web (12).

6. Conduit feed-through (10) according to one or more of the preceding claims, **characterized in that** at least one assembly aid (18, 20, 22) has a plug-in head on the side facing away from the base web (12) for plug-in connection to the second frame part (32).

7. Conduit feed-through (10) according to one or more of claims 1 to 5, **characterized in that** at least one assembly aid (18, 20, 22) is arranged spaced apart from the second frame part (32).

8. Conduit feed-through (10) according to one or more of the preceding claims, **characterized in that** the insert modules (80, 82, 84, 86, 88, 90, 92, 94, 96) in each case have a number of elongated part receivers (100, 102, 104, 106, 108, 110, 112, 114, 116, 120, 122, 124, 126, 128, 130).

9. Use of a conduit feed-through (10) according to one or more of the preceding claims for passing cables through a wall.

10. Method for assembling a conduit feed-through (10) according to one or more of claims 1 to 8, comprising the steps of
- providing a first frame part (11), a second frame part (32) and a number of insert modules (80, 82, 84, 86, 88, 90, 92, 94, 96),
- inserting at least one insert module (80, 82, 84, 86, 88, 90, 92, 94, 96) between two vertical webs (13, 14, 15) of the first frame part (11) or between one vertical web (13, 14, 15) and one assembly aid (18, 20, 22) of the first frame part (11) or between two assembly aids (18, 20, 22) of the first frame part (11), wherein at least one assembly aid (18, 20, 22) is removed from the first frame part (11) in advance at a predetermined breaking point (30) if a spacing (64, 66, 68) between a vertical web (13, 14, 15) and an assembly aid (18, 20, 22) or a spacing (65) between two assembly aids (18, 20, 22) is smaller than a nominal width (70, 72) of an insert module (80, 82, 84, 86, 88, 90, 92, 94, 96),
- arranging the second frame part (32) on the vertical webs (13, 14, 15) of the first frame part (11).

## Revendications

1. Traversée de ligne (10) comprenant au moins une première partie de cadre (11) et au moins une deuxième partie de cadre (32) ainsi qu'un certain nombre de modules d'insertion (80, 82, 84, 86, 88, 90, 92, 94, 96), dans lequel la première partie de cadre (11) comprend au moins une traverse de base (12) et au moins deux traverses verticales (13, 14, 15) qui s'étendent perpendiculairement à partir de la traverse de base (12), dans laquelle la deuxième partie de cadre (32) peut être disposée sur les traverses verticales (13, 14, 15) pour former au moins un cadre périphérique (33), dans lequel au moins un moyen d'aide au montage (18, 20, 22) est disposé entre au moins deux traverses verticales (13, 14, 15), **caractérisé en ce que** le au moins un moyen d'aide au montage (18, 20, 22) est relié à la traverse de base (12) par le matériau et présente au moins un point de rupture prédéterminé (30), les moyens d'aide au montage (18, 20, 22) pouvant être séparés et retirés de la première partie de cadre (11) au niveau du point de rupture prédéterminé (30), de sorte que des modules d'insertion (80, 82, 84, 86, 88, 90, 92, 94, 96) de différentes largeurs peuvent être insérés dans la traversée de ligne (10).

2. Traversée de ligne (10) selon la revendication 1, **caractérisée en ce que** les traverses verticales (13, 14, 15) sont disposées exactement sur un premier côté (24) de la traverse de base (12).

3. Traversée de ligne (10) selon une ou plusieurs des revendications précédentes, **caractérisée en ce que** le point de rupture prédéterminé (30) des moyens d'aide au montage (18, 20, 22) présente un affaiblissement du matériau.

4. Traversée de ligne (10) selon une ou plusieurs des revendications précédentes, **caractérisée en ce que** le point de rupture (30) est directement adjacent à la traverse de base (12).

5. Traversée de ligne (10) selon une ou plusieurs des revendications précédentes, **caractérisée en ce qu'**au moins un moyen d'aide au montage (18, 20, 22) présente une section de guidage (26) qui est directement adjacente à la traverse de base (12).

6. Traversée de ligne (10) selon une ou plusieurs des revendications précédentes, **caractérisée en ce qu'**au moins un moyen d'aide au montage (18, 20, 22) comporte, sur le côté opposé à la traverse de base (12), une tête d'enfichage pour la connexion par enfichage avec la deuxième partie de cadre (32).

7. Traversée de ligne (10) selon une ou plusieurs des revendications 1 à 5, **caractérisée en ce qu'**au moins un moyen d'aide au montage (18, 20, 22) est disposé à distance de la deuxième partie de cadre (32).

8. Traversée de ligne (10) selon une ou plusieurs des revendications précédentes, **caractérisée en ce que** les modules d'insertion (80, 82, 84, 86, 88, 90, 92, 94, 96) comportent chacun un certain nombre de logements pour pièces moulées longues (100, 102, 104, 106, 108, 110, 112, 114, 116, 120, 122, 124, 126, 128, 130).

9. Utilisation d'une traversée de ligne (10) selon une ou plusieurs des revendications précédentes pour faire passer des lignes à travers une paroi.

10. Procédé de montage d'une traversée de ligne (10) selon une ou plusieurs des revendications 1 à 8, comprenant les étapes suivantes
- la mise à disposition d'une première partie de cadre (11), d'une deuxième partie de cadre (32) ainsi que d'un certain nombre de modules d'insertion (80, 82, 84, 86, 88, 90, 92, 94, 96),
- l'insertion d'au moins un module d'insertion (80, 82, 84, 86, 88, 90, 92, 94, 96) entre deux traverses verticales (13, 14, 15) de la première partie de cadre (11) ou entre une traverse verticale (13, 14, 15) et un moyen d'aide au montage (18, 20, 22) de la première partie de cadre (11) ou entre deux moyens d'aide au montage (18, 20, 22) de la première partie de cadre (11), au moins un moyen d'aide au montage (18, 20, 22) étant préalablement retiré de la première partie de cadre (11) au niveau d'un point de rupture prédéterminé (30) lorsqu'une distance (64, 66, 68) entre une traverse verticale (13, 14, 15) et un moyen d'aide au montage (18, 20, 22) ou une distance (65) entre deux moyens d'aide au montage (18, 20, 22) est inférieure à une largeur nominale (70, 72) d'un module d'insertion (80, 82, 84, 86, 88, 90, 92, 94, 96),
- la disposition de la deuxième partie de cadre (32) sur les traverses verticales (13, 14, 15) de la première partie de cadre (11).
